# EUROPÄISCHE PATENTSCHRIFT

(11) **EP 1 134 106 B1**
(45) Veröffentlichungstag und Bekanntmachung des Hinweises auf die Patenterteilung: **11.04.2007**
(21) Anmeldenummer: 01104772.7
(22) Anmeldetag: 27.02.2001
(51) Int. Cl.: B60J 7/22, B60J 1/20

(54) **Abschirmelement für Kraftfahrzeuge, insbesondere Windschott**
Shielding member for motor vehicles, in particular wind deflector
Membre de blindage pour véhicules à moteur, en particulier déflecteur de vent

(30) Priorität: 13.03.2000 DE 10012166
(43) Veröffentlichungstag der Anmeldung: 19.09.2001
(73) Patentinhaber: SCAMBIA INDUSTRIAL DEVELOPMENTS AKTIENGESELLSCHAFT, 9494 Schaan (LI)
(72) Erfinder: Götz, Matthias, 71706 Markgrönigen (DE); Riehle, Jörg, 70439 Stuttgart (DE)
(74) Vertreter: Hoeger, Stellrecht & Partner Patentanwälte

(56) Entgegenhaltungen:
- DE-A- 4 446 764
- DE-C- 19 521 234
- US-A- 5 368 356
- US-A- 5 645 311

## Beschreibung

Die Erfindung betrifft ein Abschirmelement für Kraftfahrzeuge, insbesondere ein Windschott oder einen Sonnenschutz, umfassend ein sich in einer Fläche erstreckendes Flachmaterialstück, gemäß Oberbegriff des Anspruchs 1, wie aus DE-C-19521234 bekannt.

Bei den bislang bekannten Abschirmelementen für Kraftfahrzeuge wurde für das Flachmaterialstück ein biegeschlaffes Material eingesetzt, welches in einen Rahmen eingespannt wurde, um beispielsweise bei einem Windschott zu verhindern, daß dieses flattert.

Ein derartiges biegeschlaffes Flachmaterial hat jedoch den Nachteil, daß dieses einerseits fest an einem Rahmen fixiert und dabei noch in diesen eingespannt werden muß.

Der Erfindung liegt daher die Aufgabe zugrunde, ein Abschirmelement der gattungsgemäßen Art derart zu verbessern, daß dieses kostengünstiger herstellbar ist.

Diese Aufgabe wird bei einem Abschirmelement der eingangs beschriebenen Art erfindungsgemäß durch die Merkmale des kennzeichnenden Teils des Anspruchs 1 gelöst.

Der Vorteil der erfindungsgemäßen Lösung ist darin zu sehen, daß ein derartiges Flachmaterialstück bereits in sich eine ausreichende Formsteifigkeit aufweist, so daß durch den Rahmen nicht mehr primär die Stabilität gewährleistet werden muß.

Darüber hinaus hat ein derartiges Flachmaterialstück den Vorteil, daß die aufwendige gespannte Montage des Flachmaterialstücks am Rahmen entfallen kann.

Ein derartiges Flachmaterialstück für ein Windschott oder einen Sonnenschutz für Kraftfahrzeuge ist vorzugsweise aus einem Gewebe oder Gewirke oder Geflecht aus Drähten hergestellt, welche so dünn sind, daß dieses die Durchsicht erlaubt, so daß beispielsweise im Fall eines Windschotts trotzdem noch mit dem Rückspiegel durch das Abschirmelement hindurchgeblickt werden kann.

Hinsichtlich der Ausbildung der Drähte oder Fasern wäre es beispielsweise denkbar, Kohlenstoffasern zu verwenden, die ebenfalls in sich steif sind.

Derartige Kohlenstoffasern haben jedoch den Nachteil, daß sie sich nicht mehr nachträglich formen lassen. Aus diesem Grund ist es besonders vorteilhaft, wenn die Drähte oder Fasern aus einem formbaren Material hergestellt sind, das jedoch nach wie vor in sich steif ist, so daß auch die Möglichkeit besteht, das Flachmaterial nicht nur in einer Ebene aufzuspannen, sondern dem Flachmaterial eine beispielsweise gewölbte Form zu geben.

Dabei wäre es beispielsweise denkbar, auch Kunststoffdrähte oder -fasern einzusetzen, die beispielsweise thermoplastisch verformbar sind.

Eine besonders günstige Lösung sieht jedoch vor, daß die Drähte aus Metall sind, daß diese sich einerseits einfach und mit bekannten Verfahren verformen lassen, andererseits aber auch eine ausreichend große Formsteifigkeit aufweisen.

Da bei der erfindungsgemäßen Lösung das Flachmaterialstück selbst eine ausreichend große Eigensteifigkeit aufweist, ist es prinzipiell nicht notwendig, einen separaten Rahmen vorzusehen.

Um jedoch eine bessere Randsteifigkeit und somit eine bessere Handhabbarkeit des Abschirmelements zu erreichen, ist vorzugsweise vorgesehen, daß in einem Randbereich des Flachmaterialstücks die Drähte oder Fasern zumindest teilweise quer zu der Fläche verlaufen, in welcher sich das Flachmaterialstück erstreckt.

Dadurch läßt sich in besonders einfacher Weise noch eine zusätzliche Randversteifung erreichen, so daß die gesamte Stabilität des Abschirmelements nicht aus der Formstabilität des Flachmaterialstücks selbst resultieren muß, sondern der zumindest teilweise quer zu der Fläche verlaufende Randbereich noch einen stabilisierenden Rahmen um das Flachmaterialstück herum bildet.

Eine Ausführungsform eines derartigen Abschirmelements sieht dabei vor, daß die Drähte im Randbereich zu einer umlaufenden Randumbiegung geformt sind.

Ein weiteres vorteilhaftes Ausführungsbeispiel sieht vor, daß die Drähte im Randbereich zu einem Wulst geformt sind.

Im Rahmen der bislang erläuterten Ausführungsbeispiele wird somit nur davon ausgegangen, daß aus dem Randbereich des Flachmaterialstücks selbst der zusätzlich stabilisierende Rahmen geformt wird.

Eine weitere vorteilhafte Ausführungsform sieht jedoch vor, daß das Flachmaterialstück einen Randbereich aufweist, mit welchem ein Rahmen verbunden ist.

Ein derartiger zusätzlicher Rahmen hat den Vorteil, daß die Möglichkeit besteht, in dem Randbereich einen optisch und auch sicherheitstechnisch vorteilhaften Abschluß rings um das Abschirmelement zu schaffen, so daß insbesondere keine aufwendige Bearbeitung des Randbereichs erforderlich ist, um einen optisch und sicherheitstechnisch akzeptablen Abschluß zu erhalten.

Ferner hat ein zusätzlicher Rahmen den Vorteil, daß sich mit diesem auch noch die Möglichkeit bietet, in einfacher und bislang üblicher Form die Halterung des Abschirmelements am Kraftfahrzeug durch übliche an dem Rand angreifende Halteelemente zu realisieren.

Dabei sind bei dieser Ausführungsform jedoch nach wie vor die großen Vorteile des in sich formsteifen Flachmaterialstücks gegeben, die einerseits darin zu sehen sind, daß die Notwendigkeit, das Flachmaterialstück zu spannen, entfällt und andererseits darin, daß das Flachmaterialstück zusätzlich zu seiner Formsteifigkeit auch noch an beliebige Flächenformen abweichend von einer ebenen Fläche angepaßt werden kann.

Ein derartiger Rahmen läßt sich dabei in unterschiedlichster Art und Weise realisieren. So sieht eine vorteilhafte Ausführungsform vor, daß der Rahmen mindestens ein an den Randbereich angesetztes Rahmenteil umfaßt.

Ein derartiges Rahmenteil kann in unterschiedlichster Weise dabei am Randbereich fixiert werden. So ist es beispielsweise denkbar, den Randbereich einfach formschlüssig an dem Rahmenteil zu halten, beispielsweise durch eine in dem Rahmenteil vorgesehene Ausnehmung, wobei die Ausnehmung sich im einfachsten Falle durch zwei miteinander verbindbare Rahmenteile realisieren läßt und beim Zusammensetzen der Rahmenteile der Randbereich in die Ausnehmung eingesetzt wird.

Vorzugsweise sind dabei die Rahmenteile aneinander fixiert, beispielsweise durch eine Klebe- oder Schweißverbindung.

Eine besonders vorteilhafte Lösung sieht vor, daß der Randbereich zumindest in Verbindungsbereichen in ein Rahmenteil eingebettet ist. Eine derartige Einbettung läßt sich beispielsweise dadurch erreichen, daß das Rahmenteil in einzelnen Rahmenteilelementen aufgeweicht wird, um den Randbereich des Flachmaterialstücks einzubetten.

Ein derartiges Aufweichen des Rahmenteils läßt sich vorteilhaft dadurch realisieren, daß zur Schaffung der Verbindungsbereiche mit Ultraschall auf das aus thermoplastischem Kunststoff hergestellte Rahmenteil eingewirkt wird, um den thermoplastischen Kunststoff aufzuheizen und aufzuweichen, um somit eine Einbettung des Randbereichs in den einzelnen Verbindungsbereichen zu erhalten.

Ein anderes vorteilhaftes Ausführungsbeispiel des erfindungsgemäßen Abschirmelements sieht vor, daß der Rahmen an den Randbereich angespritzt ist, d. h., daß der Randbereich in eine Spritzform eingelegt wird und somit ein Umspritzen des Randbereichs erfolgt.

Alternativ dazu ist vorgesehen, daß der Rahmen an den Randbereich angeschäumt ist.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:
- Fig. 1: eine perspektivische Darstellung eines ersten Ausführungsbeispiels eines erfindungsgemäßen Abschirmelements;
- Fig. 2: eine ausschnittsweise vergrößerte Darstellung des Flachmaterialstücks;
- Fig. 3: einen perspektivischen Schnitt längs Linie 3-3 in Fig. 1;
- Fig. 4: einen Schnitt ähnlich Fig. 3 durch ein zweites Ausführungsbeispiel;
- Fig. 5: einen Schnitt ähnlich Fig. 3 durch ein drittes Ausführungsbeispiel;
- Fig. 6: einen Schnitt ähnlich Fig. 3 durch ein viertes Ausführungsbeispiel und
- Fig. 7: einen Schnitt ähnlich Fig. 3 durch ein fünftes Ausführungsbeispiel.

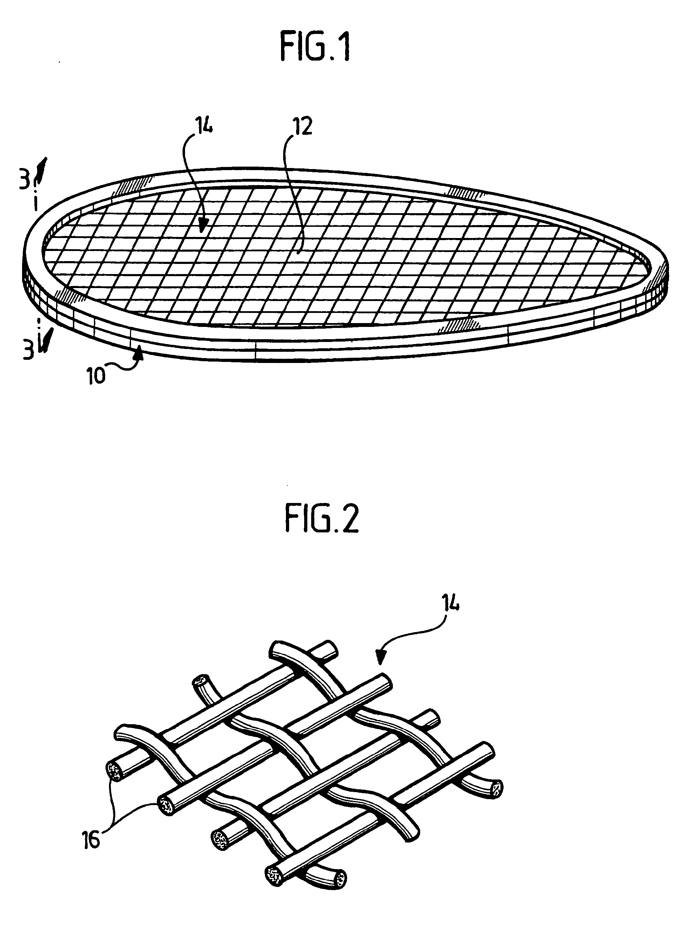

Ein Ausführungsbeispiel eines erfindungsgemäßen Abschirmelements, dargestellt in Fig. 1, umfaßt einen Rahmen 10, welcher einen Bereich 12 umschließt, welchen ein Flachmaterialstück 14 übergreift.

Das Flachmaterialstück 14 ist, wie in Fig. 2 schematisch dargestellt, aus einem Gewebe oder Gewirke von in sich steifen Drähten oder Fasern 16, vorzugsweise Metalldrähten, hergestellt und ist daher nicht biegeschlaff, sondern weist eine eigene Formsteifigkeit auf.

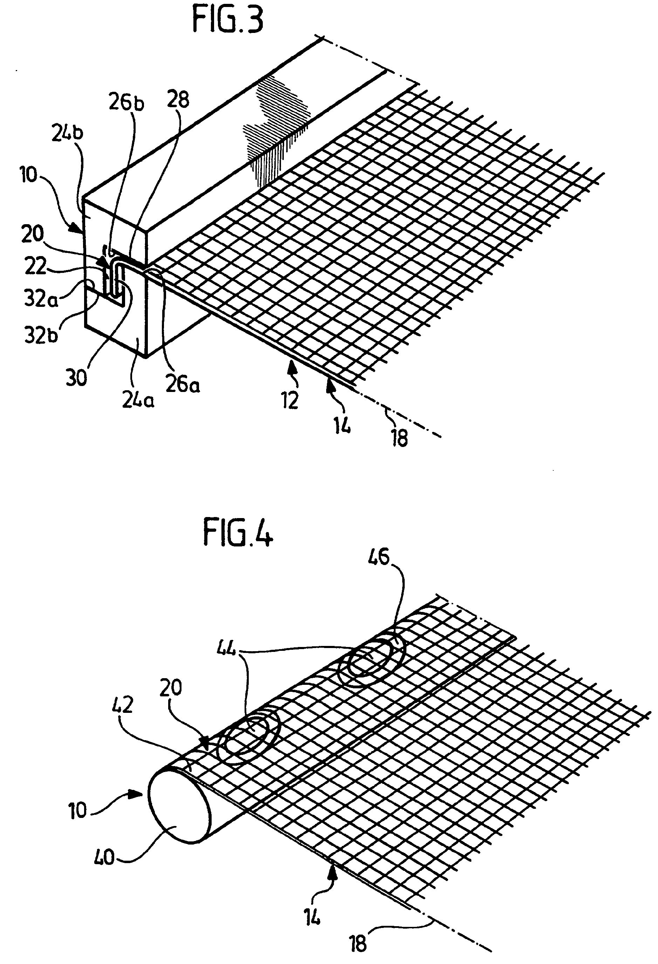

Wie in Fig. 3 dargestellt, ist bei dem ersten Ausführungsbeispiel das Flachmaterialstück 14, welches in dem vom Rahmen umschlossenen Bereich 12 in einer Fläche 18 erstreckt, mit einem Randbereich 20 so umgebogen, daß dieser quer zur Fläche 18 verläuft. Dieser Randbereich 20 liegt in einer Ausnehmung 22 des Rahmens 10, der aus zwei Rahmenteilen 24a und 24b gebildet ist, wobei zwischen diesen Rahmenteilen 24a und 24b die Ausnehmung 22 zur Aufnahme des Randbereichs 20 als Freiraum vorgesehen ist.

Die Rahmenteile 24a und 24b liegen dabei jeweils mit Auflageflächen 26a und 26b an dem Flachmaterialstück 14 an und fixieren dieses in einem Auflagebereich 28 des Randbereichs 20, wobei sich ausgehend von diesem Auflagebereich 28 ein umgebogener Bereich 30 des Randbereichs 20 in die Ausnehmung 22 hineinerstreckt.

Die beiden Rahmenteile 24a und 24b sind vorzugsweise mit weiteren Auflageflächen 32a und 32b versehen, mit welchen sie unmittelbar aneinander anliegen und im Bereich von welchen eine dauerhafte Verbindung zwischen den Rahmenteilen 24a und 24b in unterschiedlichster Art und Weise erfolgen kann.

Eine Möglichkeit einer dauerhaften Verbindung im Bereich der Auflageflächen 32a und 32b ist die des Verklebens der Rahmenteile 24a und 24b.

Eine andere Möglichkeit ist die, die Rahmenteile 24a und 24b im Bereich der Auflageflächen 32a und 32b durch Ultraschallschweißen oder eine andere Schweißart miteinander zu verbinden.

Im Fall des Ultraschallschweißens ist Voraussetzung, daß mindestens eines der Rahmenteile 24a und 24b aus einem thermoplastischen Kunststoff ist, so daß mittels Ultraschall zumindest in einzelnen Bereichen ein Aufheizen und Erweichen des thermoplastischen Kunststoffmaterials erfolgen kann und durch dieses Erweichen dann die beiden Rahmenteile 24a und 24b miteinander verbunden werden können.

Bei einem zweiten Ausführungsbeispiel eines erfindungsgemäßen Abschirmelements, dargestellt in Fig. 4, ist das Flachmaterialstück 14 mit dem Randbereich 20 nicht umgebogen, sondern der Randbereich 20 erstreckt sich in Fortsetzung der Fläche 18 über ein Rahmenteil 40 des Rahmens 10, und liegt auf einer Oberfläche 42 des Rahmenteils 40 auf.

Ist nun das Rahmenteil 40 mit über die Oberfläche 42 überstehenden Energierichtungsgebern 44 versehen, so besteht die Möglichkeit, durch Ansetzen einer Sonotrode und Einwirkung von Ultraschall dann, wenn die Energierichtungsgeber 44 aus thermoplastischem Kunststoff sind, den thermoplastischen Kunststoff im Bereich der Energierichtungsgeber 44 aufzuheizen und zu erweichen, so daß sich eine Kunststoffschmelze bildet, in welche dann ein Einbetten des Randbereichs 20 des Flachmaterialstücks 14 mit den Drähten 16 erfolgt, so daß die Drähte letztlich nach Erstarren der Kunststoffschmelze formschlüssig in einer durch Erweichen der Energierichtungsgeber 44 gebildeten Materialanhäufung 46 eingebettet sind.

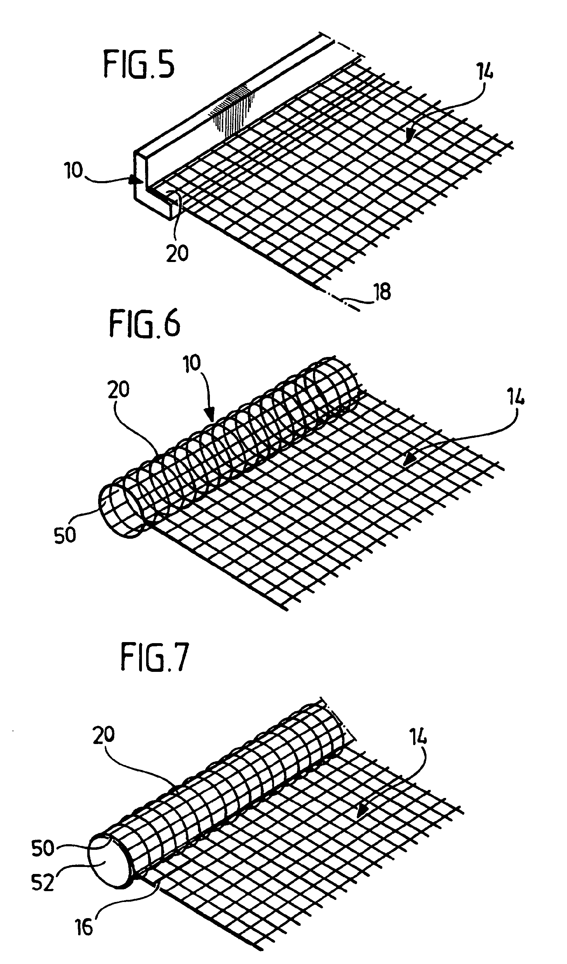

Bei einem dritten Ausführungsbeispiel des erfindungsgemäßen Abschirmelements, dargestellt in Fig. 5, wird die Form- und Eigensteifigkeit des Flachmaterialstücks 14 vorteilhaft ausgenützt.

Bei diesem dritten Ausführungsbeispiel erstreckt sich der Randbereich 20 des Flachmaterialstücks 14 vorzugsweise ebenfalls in Richtung der Ebene 18 und wird mit dem Rahmen 10 dadurch versehen, daß das den Rahmen 10 bildende Material durch Umspritzen oder Umschäumen des Randbereichs 20 an diesem angeformt wird, so daß letztlich der Randbereich 20 in dem den Rahmen 10 bildenden Material eingebettet ist und somit eine formschlüssige Verbindung zwischen dem Randbereich 20 und dem umspritzten oder umschäumten und den Rahmen 10 bildenden Material besteht.

Bei dieser Lösung kann dann, wenn das den Rahmen 10 bildende Material ein sehr weiches Material ist, der Rahmen 10 nur einen geringen oder einen unwesentlichen Beitrag zur Stabilität des Abschirmelements leisten, so daß primär die Stabilität des Abschirmelements aus der Eigensteifigkeit der Drähte 16 des Flachmaterialstücks 14 resultiert.

Bei einem vierten Ausführungsbeispiel, dargestellt in Fig. 6, ist der Randbereich des Flachmaterialstücks 14, um dessen Steifigkeit zu verbessern, durch eine Umbiegung, beispielsweise durch ein Umlegen des Randbereichs 20 zu einer Schlaufe 50, geformt, welche zusätzlich zur Eigensteifigkeit des Flachmaterialstücks 14 noch eine Randsteifigkeit ergibt.

Diese Umbiegung des Randbereichs 20 kann lediglich durch eine einfache Ummantelung oder auch durch ein Umspritzen geschützt sein. Es ist aber auch denkbar, bei geeigneter Bearbeitung der Drähte 16 lediglich den umgebogenen Randbereich 20 als Rahmen vorzusehen.

Bei einem fünften Ausführungsbeispiel, dargestellt in Fig. 7, ist in Abwandlung zum vierten Ausführungsbeispiel, dargestellt in Fig. 6, in den umgebogenen Randbereich 20 ein Keder 52 eingelegt, welcher zu einer zusätzlichen Versteifung und Stabilisierung des Randbereichs beiträgt.

## Patentansprüche

1. Abschirmelement für Kraftfahrzeuge, insbesondere Windschott oder Sonnenschutz, umfassend ein sich in einer Fläche (18) erstreckendes Flachmaterialstück (14), welches ein Gewebe oder Gewirke oder Geflecht aus in sich steifen Drähten oder Fasern (16) umfasst und somit in sich formsteif ausgebildet ist, und welches einen Randbereich (20) aufweist, mit welchem ein Rahmen (10) verbunden ist,
**dadurch gekennzeichnet, dass** der Rahmen (10) an den Randbereich (20) angespritzt ist

2. Abschirmelement nach Anspruch 1, **dadurch gekennzeichnet, dass** die Drähte oder Fasern (16) aus einem formbaren Material sind.

3. Abschirmelement nach Anspruch 1 oder 2, **dadurch gekennzeichnet, dass** die Drähte (16) aus Metall sind.

4. Abschirmelement nach Anspruch 2 oder 3, **dadurch gekennzeichnet, dass** in einem Randbereich (20) des Flachmaterialstücks (14) die Drähte oder Fasern (16) zumindest teilweise quer zu der Flache (18) verlaufen, in welcher sich das Flachmaterialstück (14) erstreckt.

5. Abschirmelement nach Anspruch 4, **dadurch gekennzeichnet, dass** die Drähte im Randbereich (20) zu einer umlaufenden Randumbiegung (50) geformt sind.

6. Abschirmelement nach Anspruch 4 oder 5, **dadurch gekennzeichnet, dass** die Drähte (16) in dem Randbereich (20) zu einem Wulst geformt sind.

7. Abschirmelement nach einem der voranstehenden Ansprüche, **dadurch gekennzeichnet, dass** der Rahmen (10) mindestens ein an den Randbereich (20) angesetztes Rahmenteil (24a, b; 40) umfasst.

8. Abschirmelement nach Anspruch 7, **dadurch gekennzeichnet, dass** der Randbereich (20) zumindest in Verbindungsbereichen (46) in ein Rahmenteil (40) eingebettet ist.

## Claims

1. Screen element for motor vehicles, in particular, wind blocker or sun screen, comprising a piece of flat material (14) extending in a surface area (18), said piece of flat material comprising a woven, knitted or braided fabric which consists of inherently stiff wires or fibres (16) and is thus of inherently rigid construction, and having an edge area (20) to which a frame (10) is connected,
**characterized in that** the frame (10) is injection moulded onto the edge area (20).

2. Screen element as defined in claim 1, **characterized in that** the wires or fibres (16) are made of a shapeable material.

3. Screen element as defined in claim 1 or 2, **characterized in that** the wires (16) are made of metal.

4. Screen element as defined in claim 2 or 3, **characterized in that** in an edge area (20) of the piece of flat material (14) the wires or fibres (16) extend at least partially transversely to the surface area (18) in which the piece of flat material (14) extends.

5. Screen element as defined in claim 4, **characterized in that** the wires in the edge area (20) are shaped so as to form a surrounding edge loop (50).

6. Screen element as defined in claim 4 or 5, **characterized in that** the wires (16) in the edge area (20) are shaped so as to form a bead.

7. Screen element as defined in one of the preceding claims, **characterized in that** the frame (10) comprises at least one frame part (24a, b; 40) positioned on the edge area (20).

8. Screen element as defined in claim 7, **characterized in that** the edge area (20) is embedded in a frame part (40) at least in connecting areas (46).

## Revendications

1. Elément de protection pour des véhicules automobiles, en particulier cloison coupe-vent ou protection contre le soleil, comprenant une pièce de matière plate (14) s'étendant dans une surface (18), pièce de matière plate qui comprend un tissu ou un maillage ou un treillis se composant de fils ou de fibres (16) en soi rigides, et est configurée, par conséquent, en étant de forme rigide, et qui présente une zone de bordure (20) à laquelle est relié un cadre (10),
**caractérisé en ce que** le cadre (10) est moulé par injection sur la zone de bordure (20).

2. Elément de protection selon la revendication 1, **caractérisé en ce que** les fils ou fibres (16) sont constitué(e)s d'une matière malléable.

3. Elément de protection selon la revendication 1 ou 2, **caractérisé en ce que** les fils (16) sont en métal.

4. Elément de protection selon la revendication 2 ou 3, **caractérisé en ce que** les fils ou les fibres (16), dans une zone de bordure (20) de la pièce de matière plate (14), s'étendent au moins partiellement de façon transversale par rapport à la surface (18) dans laquelle s'étend la pièce de matière plate (14).

5. Elément de protection selon la revendication 4, **caractérisé en ce que** les fils, dans la zone de bordure (20), sont formés en constituant un enroulement de bordure contournant (50).

6. Elément de protection selon la revendication 4 ou 5, **caractérisé en ce que** les fils (16), dans la zone de bordure (20), sont formés en constituant un bourrelet.

7. Elément de protection selon l'une quelconque des revendications précédentes, **caractérisé en ce que** le cadre (10) comprend au moins une partie de cadre (24a, b ; 40) fixée sur la zone de bordure (20).

8. Elément de protection selon la revendication 7, **caractérisé en ce que** la zone de bordure (20), au moins dans des zones de jonction (46), est noyée dans une partie de cadre (40).
